# EUROPÄISCHE PATENTANMELDUNG

(11) **EP 1 450 064 A2**
(43) Veröffentlichungstag der Anmeldung: **25.08.2004**
(21) Anmeldenummer: 03027963.2
(22) Anmeldetag: 05.12.2003
(51) Int. Cl.: F16D 65/092

(54) **Reibbelag für einen Bremssattel**

(30) Priorität: 20.02.2003 DE 10307179
(71) Anmelder: Dr.Ing. h.c.F. Porsche Aktiengesellschaft, 70435 Stuttgart (DE)
(72) Erfinder: Giessel, Brian, 71287 Weissach/Flacht (DE)

(57) **Zusammenfassung**

Diese Reibbelageinrichtung (1) ist zum Einbau in einen Bremssattel (2), insbesondere Handbremssattel eines Kraftfahrzeugs, geeignet, welche Reibbelageinrichtung wenigsten einen axial zu einer Bremsscheibe (3) beweglichen Reibbelag (6,7) umfasst, der mit Führungseinrichtungen (8,9,10) des Bremssattels zusammenarbeitet.

Um diese Reibbelageinrichtung zu optimieren, wird der Reibbelag durch einen kohlenstofffaserverstärkten, porösen Kohlenstoffkörper gebildet, dessen Poren zumindest teilweise mit Silizium und Siliziumkarbid gefüllt sind, wobei der Reibbelag mit Aufnahmen (12,13,14) für die Führungseinrichtungen versehen ist.

## Beschreibung

Die Erfindung bezieht sich auf einen Reibbelag für einen Bremssattel, insbesondere Handbremssattel eines Kraftfahrzeugs nach dem Oberbegriff des Patentanspruchs 1

Es ist ein Reibbelag für eine Scheibenbremse bekannt, DE-GM 66 03 563, der von einem Bremsbelagträger aus Metall gehalten wird. Der Bremsbelagträger weist Kastenform auf und umgibt mit Rändern den Reibbelag. An dem Bremsbelagträger sind Ösen vorgesehen, die mit Führungseinrichtungen eines Bremssattels der Scheibenbremse zusammenarbeiten. Eine ähnliche Ausführung ist der DE-GM 66 OI 232 zu entnehmen, bei der jedoch der Reibbelag aus Keramik oder keramikartigem Werkstoff besteht.

Aus der EP 0 902 866 B1 geht ein Verfahren zur Herstellung eines Reibelements aus einem Material hervor, das ein metallisches Bindemittel, mindestens ein Gleitmittel und Füller in Form harter Teilchen aufweist. Dabei befasst sich das Verfahren mit Schritten des Mischens von Pulvern der verschiedenen Bestandteile des Materials, des in Form Bringens des Gemisches und des Sinterns.

Aufgabe der Erfindung ist es eine Reibbelageinrichtung für einen Bremssattel, insbesondere Handbremssattel eines Kraftfahrzeugs zu schaffen, bei der sich ein Reibbelag der Reibbelageinrichtung durch bauliche Einfachheit und hohe Funktionalität auszeichnet.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Reibbelageinrichtung auf einen metallischen Bremsbelagträger verzichtet und lediglich mit einem einzigen aus Keramik bspw. C/C-SiC Werkstoffen bestehenden Reibbelag auskommt, der nicht nur im Aufbau einfach ist, sondern auch hohen thermischen und reibungsspezifischen Belastungen standhält. Dabei lassen sich die Aufnahmen für die Führungseinrichtungen ohne Weiteres in den Reibbelag integrieren, in den z. B. aus Festigkeitsgründen eine Gewebeeinlage integriert sein kann. Der Reibbelag ist nicht nur mit einem hohen Reibwert versehen, sondern weist auch noch eine hohe Temperaturbeständigkeit auf. Durch hohen Reibwert und hohe Temperaturbeständigkeit können zum einen Betätigungskräfte am Handbremshebel reduziert und zum anderen die Alterungsneigung - Verglasung - begrenzt werden. Schließlich werden die Aufnahmen für die Führungseinrichtungen durch eine Durchgangsöffnung und Umschlingungshaken gebildet, die sich mit vertretbar geringem Aufwand in den Reibbelag einarbeiten lassen.

In der Zeichnung wird ein Ausführungsbeispiel der Erfindung gezeigt, das nachstehend näher beschrieben wird.

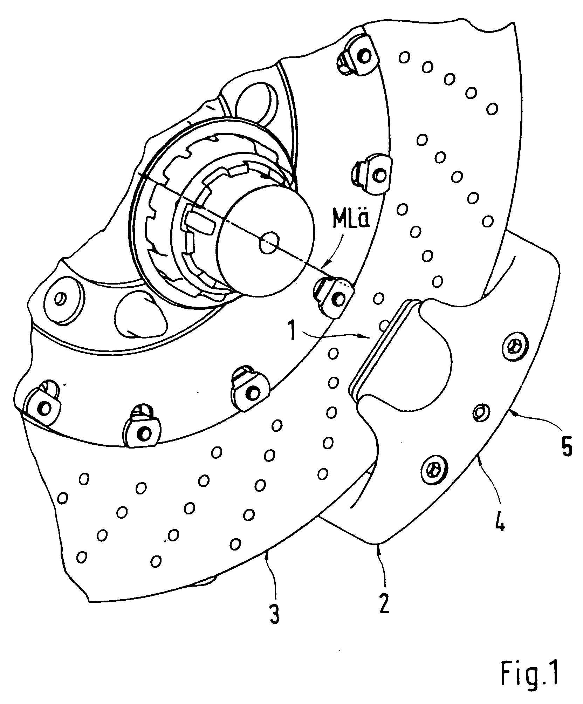

Es zeigen
- Fig. 1: eine Schrägansicht auf eine an einer Bremsscheibe festgelegten Reibbelageinrichtung nach der Erfindung,

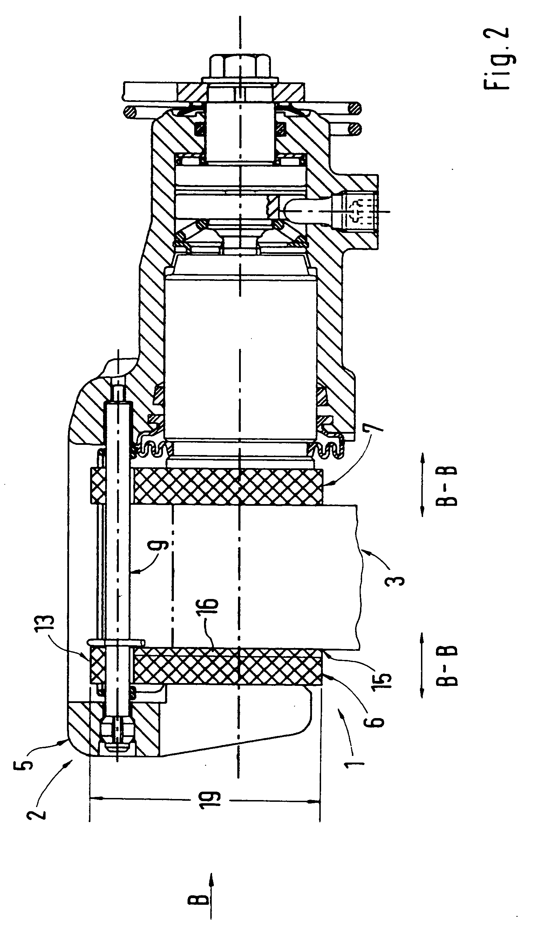

- Fig. 2: einen Schnitt durch einen Handbremssattel mit der Reibbelageinrichtung,

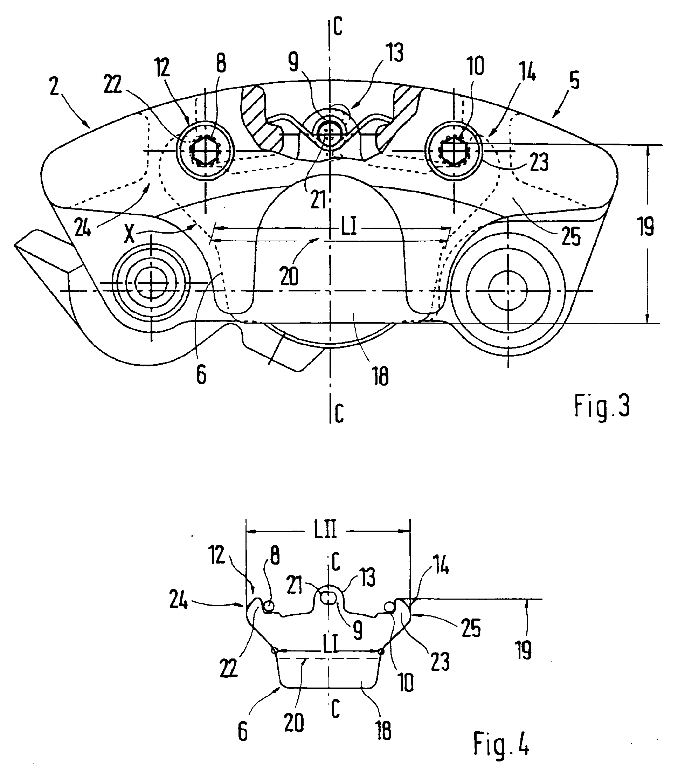

- Fig. 3: eine Ansicht in Pfeilrichtung A nach Fig. 2,
- Fig. 4: eine Einzelheit X der Fig. 3:

Eine Belagvorrichtung 1 ist in einen Bremssattel 2 eingebaut, der an einer Bremsscheibe 3 einer Scheibenbremsanlage 4 eines nicht näher gezeigten Kraftfahrzeugs angeordnet und als Handbremssattel 5 ausgebildet ist. Die Belagvorrichtung 1 umfasst zwei beiderseits der z. B aus Keramik hergestellten Bremsscheibe 3 vorgesehenen Reibbeläge 6 und 7, die quer zur Bremsscheibe 3 bzw. in axialer Richtung B-B relativbeweglich gelagert sind, und zwar an Führungseinrichtungen 8, 9 und 10 des Bremssattels 2. Jeder Reibbelag z.B. 6 besteht aus einem kohlenstofffaserverstärktem, porösem Kohlenstoffkörper 11, dessen Poren zumindest teilweise mit Silizium und Siliziumkarbid gefüllt sind - C/C-SiC - Werkstoffe -. Außerdem ist der Reibbelag 6 mit Aufnahmen 12,13 und 14 für die Führungsvorrichtungen 8,9 10 versehen.

In den Kohlenstoffkörper 11 des Reibbelags 6 ist zur Festigkeitserhöhung des zuletzt genannten eine Gewebeeinlage integriert. Darüber hinaus weist der Reibbelag 6 einen relativ hohen Reibwert auf, wofür er auf der der Bremsscheibe 3 zugekehrten Seite 15 mit einer entsprechenden Reibschicht 16 versehen sein kann; und dieser Reibbelag 6 zeichnet sich durch eine vergleichsweise hohe Temperaturbeständigkeit aus.

Der Reibbelag 6 ist auf einer einer Mittellängsachse Mlä der Bremsscheibe 3 zugekehrten Seite 17 über einen Teilabschnitt 18 seiner Höhe 19 nach Art eines Rechtecks ausgeführt und erweitert sich von einer Konstruktionslinie 20 aus in Richtung der als kreiszylinderische Bolzen dargestellten Führungseinrichtungen 8,9 und 10 bzw. der Aufnahmen 12, 13 und 14, dergestalt, dass aus der ersten Länge LI im Teilabschnitt 19 die zweite Länge L II im Bereich der Aufnahmen 12,13 und 15 wird. Die Aufnahmen 12, 13 und 14 werden durch eine Durchgangsöffnung 21 und zwei Umschlingungshaken 22 und 23 gebildet, die die jeweilige Führungseinrichtung 8 oder 10 in ihrer Umfangsrichtung nur teilweise umgeben. In der Vorderansicht des Reibbelags 6 gesehen liegt die Durchgangsöffnung 21 in einer Mittellängsebene C-C der Länge L II von besagtem Reibbelag; wogegen die Umschlingungshaken 22 und 23 beiderseits von der Mittellängsebene C-C angeordnet sind, jedoch spiegelbildlich zueinander und benachbart von seitlichen Begrenzungen 24 und 25 des Belags 6.

Schließlich ist der Reibbelag 6 durch einen Trennvorgang aus einem Plattenmaterial herausgearbeitet, wofür sich bspw. Wasserstrahlschneiden eignet. Bei diesem Vorgang können auch die Durchgangsöffnung 21 sowie die Umschlingungshaken 22 und 23 gebildet werden.

## Patentansprüche

1. Reibbelageinrichtung für einen Bremssattel, insbesondere Handbremssattel eines Kraftfahrzeugs, die wenigstens einen axial zu einer Bremsscheibe beweglichen Reibbelag umfasst, welcher Reibbelag mit Führungseinrichtungen des Bremssattels zusammenarbeitet, **dadurch gekennzeichnet, dass** der Reibbelag (6 und 7) durch einen kohlenstofffaserverstärkten, porösen Kohlenstoffkörper (11) gebildet wird, dessen Poren zumindest teilweise mit Silizium und Siliziumkarbid gefüllt sind, wobei der Reibbelag (6 und 7) mit Aufnahmen (12,13 und 14) für die Führungseinrichtungen (8, 9 und 10) versehen ist.

2. Reibbelageinrichtung nach Anspruch I, **dadurch gekennzeichnet, dass** in den Kohlenstoffkörper (11) des Reibbelags (6 und 7) eine Gewebeeinlage integriert ist.

3. Reibbelageinrichtung nach Anspruch 1, **dadurch gekennzeichnet, dass** der Reibbelag (6 und 7) einen relativ hohen Reibwert aufweist.

4. Reibbelageinrichtung nach Anspruch 3, **dadurch gekennzeichnet, dass** der Reibbelag (6 und 7) auf seiner einer Bremsscheibe (3) zugekehrten Seite (15) mit einer Reibschicht (16) versehen ist.

5. Reibbelageinrichtung nach Anspruch 1, **dadurch gekennzeichnet, dass** der Reibbelag (6 und 7) eine relativ hohe Temperaturbeständigkeit aufweist.

6. Reibbelageinrichtung nach Anspruch 1, **dadurch gekennzeichnet, dass** die Aufnahmen (12, 13 und 14) des Belags (6 und 7) zumindest eine Durchgangsöffnung (21) und einen Umschlingungshaken (22,23) für die durch Bolzen gebildeten Führungseinrichtungen (8,9 und 10) aufweisen.

7. Reibbelageinrichtung nach Anspruch 6, **dadurch gekennzeichnet, dass** in einer Vorderansicht des Reibbelags (6 und 7) gesehen die Durchgangsöffnung (21) in einer Mittellängsebene (B-B) liegt, wogegen ein erster Umschlingungshaken (22) und ein zweiter Umschlingungshaken (23) beiderseits dieser Mittellängsebene (B-B) benachbart von seitlichen Begrenzungen (25 und 26) des Belags (6 und 7) vorgesehen sind.

8. Reibbelageinrichtung nach einem oder mehreren der vorangehenden Ansprüche, **dadurch gekennzeichnet, dass** der Reibbelag (6 und 7) durch einen Trennvorgang bspw. Wasserstrahlschneiden aus Plattenmaterial herausgearbeitet ist.

9. Reibbelageinrichtung nach einem oder mehreren der vorangehenden Ansprüche, **dadurch gekennzeichnet, dass** sowohl die Umschlingungshaken (22 und 23) als auch die Durchgangsöffnung (21) durch den Trennvorgang gebildet werden.
